# EUROPEAN PATENT APPLICATION

(11) **EP 4 541 772 A1**
(43) Date of publication of application: **23.04.2025**
(21) Application number: 24206069.7
(22) Date of filing: 11.10.2024
(51) Int. Cl.: C01G 53/50, C01G 53/80, C01G 53/84, H01M 4/525

(54) **POSITIVE ELECTRODE ACTIVE MATERIAL AND LITHIUM SECONDARY BATTERY COMPRISING THE SAME**

(30) Priority: 20.10.2023 KR 20230140982
(71) Applicant: ECOPRO BM CO., LTD., Cheongju-si, Chungcheongbuk-do 28116 (KR)
(72) Inventor: PARK, Eun Hee, 28116 Cheongju-si, Chungcheongbuk-do (KR); JUNG, Hyun Su, 28116 Cheongju-si, Chungcheongbuk-do (KR); LIM, Ra Na, 28116 Cheongju-si, Chungcheongbuk-do (KR); LIM, Kyung Min, 28116 Cheongju-si, Chungcheongbuk-do (KR)
(74) Representative: Vossius & Partner Patentanwälte Rechtsanwälte mbB

(57) **Abstract**

The present invention relates to a positive electrode active material and a lithium secondary battery including the same, and more particularly, to a bimodal-type positive electrode active material, in which low energy density per unit volume and low stability of an overlithiated lithium manganese-based oxide are improved, and a lithium secondary battery including the same.

## Description

### BACKGROUND

### 1. Field of the Invention

The present invention relates to a positive electrode active material and a lithium secondary battery including the same, and more particularly, to a bimodal-type positive electrode active material, in which low energy density per unit volume and low stability of an overlithiated lithium manganese-based oxide are improved, and a lithium secondary battery including the same.

### 2. Discussion of Related Art

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be LiCoO₂, LiMn₂O₄, LiNiO₂, LiMnO₂, or a mixed oxide comprising two or more of Ni, Co, Mn or Al.

Among the positive electrode active materials, LiCoO₂ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as LiMnO₂ and LiMn₂O₄ have advantages of excellent thermal safety and low costs, but also have problems of small capacity and poor high-temperature characteristics. In addition, while an LiNiO₂-based positive electrode active material exhibits a battery characteristic such as a high discharge capacity, due to cation mixing between Li and a transition metal, it is difficult to synthesize the LiNiO₂-based positive electrode active material, thereby causing a big problem in rate performance.

In addition, depending on the intensity of such a cation mixing, a large amount of Li by-products is generated. Most of the Li by-products include LiOH and Li₂CO₃ may cause gelation in the preparation of a positive electrode paste, or cause gas generation due to repeated charging/discharging after the manufacture of an electrode. In addition, residual Li₂CO₃ among the Li by-product increases cell swelling to act as the cause of degrading lifetime characteristics.

Various candidate materials for compensating for these shortcomings of conventional positive electrode active materials are being proposed.

In one example, there is on-going research to use an overlithiated lithium manganese-based oxide in which an excess of Mn among transition metals is included and a lithium molar content is higher than the sum of the molar contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to the excessive amount of Mn contained in the oxide, electrical conductivity is relatively low, and thus the rate performance of a lithium secondary battery using OLO is low. As such, when the rate performance is low, there is a problem in that charge/discharge capacity and lifetime efficiency (capacity retention) are degraded during the cycling of a lithium secondary battery.

In addition, due to the material's nature, OLO has a disadvantage in that its energy density per unit volume is low because of high interparticle porosity.

To solve the above-described problems, although various studies on changing the composition of OLO have been conducted, such attempts have not yet reached the level of commercialization.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using lithium iron phosphate (LFP) have mainly been used, but recently, the use of a nickel-based lithium composite oxide having a larger energy capacity per weight than LFP is increasing.

In addition, recently, nickel-based lithium composite oxides mainly used as positive electrode active materials for high-capacity lithium secondary batteries essentially use ternary metal elements such as nickel, cobalt and manganese or nickel, cobalt and aluminum. However, since cobalt is not only subject to unstable supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that electrochemical properties or stability of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

For example, the disadvantage of the low energy density per unit volume of OLO due to the composition of a material (including an excess of lithium) and its structural characteristic (high interparticle porosity) has been described above.

However, the present inventors confirmed that a low energy density per unit volume of an overlithiated lithium manganese-based oxide may be improved by preparing the lithium manganese-based oxide by dividing it into small and large particles and providing a bimodal-type positive electrode active material as a mixture of the small and larger particles.

Accordingly, the present invention is directed to providing a positive electrode active having bimodal particle size distribution for improving a low energy density per unit volume of an overlithiated lithium manganese-based oxide. As used herein, the term "particle size" has the same meaning as "particle diameter".

In addition, compared to other types of commercially-available positive electrode active materials, although a conventional overlithiated lithium manganese-based oxide has disadvantages in terms of electrochemical properties and/or stability, when the selective growth of primary particles constituting a small particle in the positive electrode active material having bimodal particle size distribution is induced, an overlithiated lithium manganese-based oxide can also exhibit electrochemical properties and stability to commercially-available levels, which was confirmed by the present inventors.

Accordingly, the present invention is directed to providing a positive electrode active material having bimodal particle size distribution, which includes a small particle and a large particle to improve a low energy density per unit volume of an overlithiated lithium manganese-based oxide, and thus can reduce side reactions caused by the high specific surface area of a small particle compared to a large particle by inducing the selective growth of primary particles of the small particle by substituting at least some of the oxygens present in the small particle with a halogen (e.g., fluorine).

In addition, the present inventors have confirmed that a lithium manganese-based oxide has a higher possibility of transition metals being eluted from the particle surface as charge/discharge is repeated than common ternary lithium composite oxides other than the overlithiated layered oxide (OLO). Particularly, excessive Mn included in the lithium manganese-based oxide has a high possibility of being eluted from the particle surface.

When a transition metal is eluted from the lithium manganese-based oxide, the eluted transition metal may react with an electrolyte solution to form impurities on the surface of the lithium manganese-based oxide. The impurities act as the cause of not only enhancing the surface resistance of the lithium manganese-based oxide but reducing the intercalation/deintercalation efficiency of lithium ions via the lithium manganese-based oxide.

In addition, the transition metal eluted from the lithium manganese-based oxide or the impurities formed by the reaction between the eluted transition metal and an electrolyte solution may migrate to a negative electrode by means of the electrolyte solution as a medium, and be deposited on the surface of the negative electrode.

For example, side reactions with an electrolyte solution may occur on the surface of the lithium manganese-based oxide, or excessive Mn²⁺ included in the lithium manganese-based oxide may be eluted into an electrolyte solution due to the structural change (a change in crystal structure or the like) of the lithium manganese-based oxide. The Mn²⁺ eluted into the electrolyte solution may migrate to the surface of a negative electrode using the electrolyte solution as a medium and react with various materials (electrons, electrolyte solution, electrodes, or impurities) present in the battery during formation or charging/discharging, resulting in the presence of impurities including Mn²⁺, Mn metal, or an Mn-containing compound (e.g., MnCO₃, MnO, or MnF₂) on the surface of the negative electrode.

The transition metal or impurities deposited on the surface of the negative electrode may rapidly increase a negative electrode resistance, and such an abnormal resistance is a typical cause of accelerating the deterioration of the lifetime of a lithium secondary battery.

Particularly, a lithium secondary battery using the lithium manganese-based oxide as a positive electrode active material is vulnerable to the above-described problems because of a higher operating voltage, compared to a lithium secondary battery using a commercially-available ternary lithium composite oxide as a positive electrode active material.

However, currently, there is no technology to resolve the elution of transition metals from an overlithiated lithium manganese-based oxide and problems caused thereby.

Accordingly, the present invention is directed to providing a positive electrode active material having bimodal particle size distribution, which includes a small particle and a large particle to improve a low energy density per unit volume of an overlithiated lithium manganese-based oxide, and thus can inhibit or mitigate elution of transition metals from the lithium manganese-based oxide by covering the surfaces of the small particle and the large particle with barrier layers.

In addition, the present invention is also directed to providing a lithium secondary battery using the positive electrode active material defined herein.

The objects of the present invention are not limited to the above-mentioned objects, and other objects and advantages of the present invention which are not mentioned can be understood by the following description and more clearly understood by exemplary embodiments of the present invention. In addition, it will be readily apparent that the objects and advantages of the present invention may be realized by the means and combinations thereof indicated in the claims.

To solve the above-described technical problems, according to one aspect of the present invention, a positive electrode active material having bimodal particle size distribution, which includes a first lithium manganese-based oxide and a second lithium manganese-based oxide, having different average particle diameters, is provided.

In the present invention, the first lithium manganese-based oxide may be referred to as a small particle, and the second lithium manganese-based oxide may be referred to as a large particle. The first lithium manganese-based oxide and the second lithium manganese-based oxide, constituting the positive electrode active material, are each independently an oxide in which a phase belonging to the C2/m space group and a phase belonging to the R-3m space group are dissolved. The lithium manganese-based oxide in which a phase belonging to a C2/m space group and a phase belonging to a R-3m space group are dissolved can also be described as a lithium manganese-based oxide comprising both a phase belonging to a C2/m space group and a phase belonging to a R-3m space group. The lithium manganese-based oxide comprises preferably at least 30 volume-%, more preferably at least 50 volume-%, even more preferably at least 70 volume-% (such as at least 80, at least 90 or even at least 95 volume-%) in total of a phase belonging to a C2/m space group and a phase belonging to a R-3m space group. The ratio of the phase belonging to a C2/m space group and a phase belonging to a R-3m space group can be calculated through the composition ratio of lithium and transition metal in the lithium manganese-based oxide.

Generally, in a commercially available ternary lithium composite oxide with a nickel-cobalt-manganese (NCM) or nickel-cobalt-aluminum (NCA) composition, the phase belonging to the R-3m space group is present as a single phase, whereas, in the overlithiated lithium manganese-based oxide defined herein, a phase belonging to a C2/m space group and a phase belonging to an R-3m space group are dissolved or composited.

In one embodiment, the first lithium manganese-based oxide and the second lithium manganese-based oxide are each independently a composite oxide including lithium, manganese, and a transition metal other than manganese. The transition metal may include at least one selected from nickel, cobalt, and aluminum.

Among the first lithium manganese-based oxide and the second lithium manganese-based oxide, constituting the positive electrode active material, the first lithium manganese-based oxide may be selectively substituted by a halogen. The halogen is preferably fluorine.

Specifically, at least some of the oxygen present in the first lithium manganese-based oxide may be substituted by halogen.

Accordingly, the first lithium manganese-based oxide may be represented by Chemical Formula 1 or Chemical Formula 1-1 below.

[Chemical Formula 1] Li(LiₐM1ₓM2_{y})O_{2-b}X_{b}

wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1, X is a halogen that can replace at least some of the oxygens present in the lithium manganese-based oxide, 0<a≤0.7, 0<b≤0.1, 0<x≤1, 0≤y<1, and 0<x+y≤1.

[Chemical Formula 1-1] rLi₂MnO_{3-b"}X'_{b"}·(1-r)Li_{a'}M1_{x'}M2_{y'}O_{2-b'}X_{b'}

wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1, X and X' are halogens that can replace at least some of the oxygens present in the lithium manganese-based oxide, 0<r≤0.7, 0<a'≤1, 0≤b'≤0.1, 0≤b"≤0.1, 0<x'≤1, 0≤y'<1, 0<x'+y'≤1, and b' and b" are not 0 at the same time.

On the other hand, the second lithium manganese-based oxide may be represented by Chemical Formula 2 below.

[Chemical Formula 2] rLi₂MnO₃·(1 -r)Li_{a'}M1_{x'}M_{2y'}O₂

wherein, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1, 0<r≤0.7, 0<a'≤1, 0<x'≤1, 0≤y'< 1, and 0<x'+y'≤1.

At least one barrier layer is present on the surfaces of the first lithium manganese-based oxide and the second lithium manganese-based oxide. The barrier layers may prevent or mitigate the elution of transition metals from the first lithium manganese-based oxide and the second lithium manganese-based oxide. The barrier layers may have the same or different compositions from each other.

The barrier layers may include an oxide containing at least one element selected from B, Si, P, and Ge. The barrier layers preferably include an oxide of B.

In addition, according to another aspect of the present invention, a positive electrode including the above-described positive electrode active material is provided.

Moreover, according to still another aspect of the present invention, a lithium secondary battery using the above-described positive electrode is provided.

### DETAILED DESCRIPTION OF EXEMPLARY EMBODIMENTS

For easier understanding of the present invention, certain terms are defined herein for convenience. Unless otherwise defined herein, scientific and technical terms used in the present invention will have meanings generally understood by those skilled in the art. In addition, unless otherwise specified in the context, it should be understood that the singular includes the plural, and the plural includes the singular. Amounts or ratios indicated herein are molar amounts or molar ratios, unless otherwise specified in the context.

Hereinafter, a positive electrode active material including an overlithiated lithium manganese-based oxide and a lithium secondary battery including the positive electrode active material according to some embodiments of the present invention will be described in further detail.

### Positive electrode active material

According to one aspect of the present invention, a positive electrode active material including a lithium manganese-based oxide, in which a phase belonging to a C2/m space group and a phase belonging to an R-3m space group are dissolved, is provided.

The phase belonging to the C2/m space group and the phase belonging to the R-3m space group may be distinguished not only through the composition of each phase, but also by a peak specific to each phase during XRD analysis. For example, the specific peak for the phase belonging to the C2/m space group may appear in the area of 2θ=20.8±1°, and the specific peak for the phase belonging to the R-3m space group may appear in the area of 2θ=18.6±1 °.

As the lithium manganese-based oxide is a composite oxide in which a phase belonging to a C2/m spacer group and a phase belonging to a R-3m space group are dissolved, a phase belonging to a C2/m spacer group and a phase belonging to a R-3m space group coexist in the lithium manganese-based oxide. In other words, the lithium manganese-based oxide is a composite oxide comprising a phase belonging to a C2/m space group and a phase belonging to a R-3m space group. The phase belonging to a C2/m space group and the phase belonging to a R-3m space group can be considered to be dispersed in the remainder of the lithium manganese-based oxide. In addition, the lithium manganese-based oxide is different from a composite oxide having a spinel crystal structure belonging to an Fd-3m space group (e.g., LiMn₂O₄ or an oxide having a composition similar thereto).

The lithium manganese-based oxide may be classified as a first lithium manganese-based oxide, which is a small particle, and a second lithium manganese-based oxide, which is a large particle, based on the average particle diameter. The terms "small particle" and "large particle" used herein are relative concepts, and a group of particles with a smaller average particle diameter than that of the second lithium manganese-based oxide may be defined as a small particle, and a group of particles with a larger average particle diameter than that of the first lithium manganese-based oxide may be defined as a large particle. In addition, as to be described later, each of the terms "small particle" and "large particle" may be defined in the range of an average particle diameter.

Accordingly, the positive electrode active material defined herein is a positive electrode active material having bimodal particle size distribution since including both the first lithium manganese-based oxide as the small particle and the second lithium manganese-based oxide as the large particle.

The bimodal particle size distribution refers to a distribution in which two peaks for different particle sizes appear during laser diffraction particle size analysis of the positive electrode active material. Accordingly, in a volume cumulative particle size distribution graph, a lithium manganese-based oxide appearing a peak in a relatively small particle size is a small particle (first lithium manganese-based oxide), and a lithium manganese-based oxide appearing a peak in a relatively large particle size is a large particle (second lithium manganese-based oxide).

Hereinafter, unless defined otherwise, it might be understood that the lithium manganese-based oxide refers to both the first lithium manganese-based oxide and the second lithium manganese-based oxide.

The lithium manganese-based oxide at least includes lithium, manganese, and a transition metal other than manganese. Also, the lithium manganese-based oxide at least includes lithium, manganese, and a metal other than manganese. The metal may include at least one selected from nickel, cobalt, and aluminum. Thus, the term "transition metal" as used in the present invention includes aluminum. Furthermore, manganese in the present invention is typically not intended if the term "transition metal" is used. In addition, the lithium manganese-based oxide may include lithium, nickel, and manganese, and selectively further include a transition metal, other than nickel.

The lithium manganese-based oxide is also referred to as an overlithiated layered oxide (OLO) since the equivalent weight of lithium present in the lithium manganese-based oxide is larger than the sum of the equivalent weight of other transition metals (generally, when the molar ratio (Li/Metal molar ratio) of lithium to all metal elements, other than lithium, in the lithium manganese-based oxide is higher than 1).

In addition, the lithium manganese-based oxide is also referred to as overlithiated and layered oxides with excess manganese because the content of manganese present in the lithium manganese-based oxide is larger than the content of other transition metals.

Generally, considering that a commercially available ternary lithium composite oxide with a nickel-cobalt-manganese (NCM) or nickel-cobalt-aluminum (NCA) composition has a content of manganese among all metal elements, excluding lithium, of 20 mol% or less, the lithium manganese-based oxide has a relatively high proportion of manganese (e.g., 50 mol% or more, 52 mol% or more, 53 mol% or more, or 55 mol% or more) among all metal elements compared to the commercially-available ternary lithium composite oxide.

In addition, considering that a commercially-available ternary lithium composite oxide with a nickel-cobalt-manganese (NCM) or nickel-cobalt-aluminum (NCA) composition has the content of nickel among all metal elements, excluding lithium, of 60 mol% or more (80 mol% or more for the high-Ni type), the lithium manganese-based oxide has a relatively low proportion of nickel among all metal elements (e.g., less than 50 mol%, 48 mol% or less, 46 mol% or less, 45 mol% or less, 44 mol% or less, 42 mol% or less, or 40 mol% or less) compared to the commercially-available ternary lithium composite oxide.

There is also a difference in that the Li/Metal molar ratio measured from the lithium manganese-based oxide defined herein is larger than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. Meanwhile, the Li/Metal molar ratio of the lithium manganese-based oxide defined herein may be higher than 1, and preferably has a value ranging from 1.1 to 1.6, 1.1 to 1.5, 1.2 to 1.6, or 1.2 to 1.5. It is to be understood that the "metal" in "Li/Metal molar ratio" is a metal other than Li. Thus, the above "Li/Metal molar ratio" may also be referred to as "Li/(Metal other than Li) molar ratio".

Accordingly, the lithium manganese-based oxide used herein may be defined as a composite oxide in which the content of manganese among all metal elements, excluding lithium, is 50 mol% or more, preferably 60 mol% or more, or a composite oxide in which, the content of manganese is 50 mol% or more, preferably 60 mol% or more, and the nickel content is less than 50 mol%, preferably 40 mol% or less, among all metal elements, excluding lithium.

In addition, the lithium manganese-based oxide used herein may be defined as a composite oxide in which a molar ratio of lithium to all metal elements, excluding lithium, is higher than 1, or ranges from 1.1 to 1.6, 1.1 to 1.5, 1.2 to 1.6, or 1.2 to 1.5, and the content of manganese among all metal elements, excluding lithium, is 50 mol% or more, or a composite oxide in which a molar ratio of lithium to all metal elements, excluding lithium, is higher than 1, or ranges from 1.1 to 1.6, 1.1 to 1.5, 1.2 to 1.6, or 1.2 to 1.5, the content of manganese among all metal elements, excluding lithium, is 50 mol% or more, and the content of nickel is less than 50 mol%.

Despite the difference in composition described above, the lithium manganese-based oxide may also serve as a composite metal oxide capable of intercalation/deintercalation of lithium ions.

The lithium manganese-based oxide included in the positive electrode active material defined herein may be present as particles including at least one primary particle.

When the lithium manganese-based oxide is present as a single primary particle, the lithium manganese-based oxide may be referred to as a single particle. On the other hand, when the lithium manganese-based oxide is present as an aggregate in which a plurality of primary particles are aggregated, the lithium manganese-based oxide may be referred to as a secondary particle.

The positive electrode active material may include at least one selected from a lithium manganese-based oxide present as a single particle and a lithium manganese-based oxide present as a secondary particle in which a plurality of primary particles are aggregated.

The primary particle constituting the lithium manganese-based oxide may have a rod shape, an oval shape, and/or an irregular shape. In addition, unless specifically intended during the manufacturing process, primary particles having various shapes are present in the same positive electrode active material. In addition, the primary particle refers to a particle unit in which no grain boundary appears when the particle is observed at a magnification of 5,000 to 20,000 times using a scanning electron microscope.

The primary particle constituting the lithium manganese-based oxide defined herein may have an average particle diameter in the range of from 0.05 to 5 µm, 0.05 to 1.0 µm, 0.1 to 1.0 µm, or 0.25 to 0.75 µm. Here, the average particle diameter of the primary particles may be the average value of the length of the primary particle in the major axis direction and the length of the primary particle in the minor axis direction ([major axis length+minor axis length]/2). Also, the average particle diameter of the primary particle can be calculated as the average value of the particle diameters of all primary particles observed from the surface SEM image of the lithium manganese-based oxide.

When the average particle diameter of the primary particles is smaller than 0.05 µm, the lithium manganese-based oxide (secondary particles) consisting of the primary particles has a relatively large specific surface area. In this case, the possibility of side reactions between the lithium manganese-based oxide and an electrolyte solution may increase during the storage or operation of a lithium secondary battery.

On the other hand, when the average particle diameter of the primary particles is larger than 5 µm, as the growth of the primary particles is excessively induced, the diffusion path of lithium ions in the primary particle also becomes longer. When the diffusion path of lithium ions in the primary particle is excessively long, the mobility of lithium ions in the primary particle and the diffusivity of lithium ions mediated by the primary particle decrease, which becomes the cause of an increase in resistance of the lithium manganese-based oxide (secondary particles) composed of the primary particles.

The energy density per unit volume of the bimodal positive electrode active material may be increased by ensuring that a difference in average particle diameter between the second lithium manganese-based oxide and the first lithium manganese-based oxide is 3 µm or more, and preferably, 4 µm or more.

The main peak of the particle size distribution graph (x axis: particle size (µm), Y axis: vol%) based on the volume of the first lithium manganese-based oxide may exist between 1 µm to 8 µm, and preferably, 2 µm to 7 µm. In addition, the average particle diameter calculated by the average value of the length of the primary particle in the major axis direction and the length of the primary particle in the minor axis direction ([major axis length+minor axis length]/2) of the first lithium manganese-based oxide may be in the range of from 2 µm to 6 µm.

The main peak of the particle size distribution graph (x axis: particle size (µm), Y axis: vol%) based on the volume of the second lithium manganese-based oxide may exist between 6 µm to 24 µm, and preferably, 8 µm to 22 µm. In addition, the average particle diameter calculated by the average value of the length of the primary particle in the major axis direction and the length of the primary particle in the minor axis direction ([major axis length+minor axis length]/2) of the second lithium manganese-based oxide may be in the range of from 7 µm to 14 µm.

In addition, to optimize the energy density per unit volume of the biomodal positive electrode active material, in the positive electrode active material, the first lithium manganese-based oxide and the second lithium manganese-based oxide are preferably included in a weight ratio in the range of from 10:90 to 80:20, 20:80 to 70:30, or 30:70 to 60:40.

The first lithium manganese-based oxide may be present while being filled in voids in the second lithium manganese-based oxide, attached to the surface of the second lithium manganese-based oxide, or present as an aggregate of particles of the first lithium manganese-based oxide.

In the positive electrode active material, when the ratio of the first lithium manganese-based oxide to the second lithium manganese-based oxide is excessively small, it may be difficult to sufficiently fill a void formed in the second lithium manganese-based oxide with the first lithium manganese-based oxide.

On the other hand, in the positive electrode active material, when the ratio of the first lithium composite oxide to the second lithium manganese-based oxide is excessively large, the energy density per unit volume of the positive electrode active material may be degraded.

The average particle diameters of the first lithium manganese-based oxide and the second lithium manganese-based oxide may vary according to the number of the primary particles constituting the secondary particle. The average particle diameters (D₅₀) of the first lithium manganese-based oxide and the second lithium manganese-based oxide may be measured using a laser diffraction method. For example, after dispersing the first lithium manganese-based oxide and the second lithium manganese-based oxide in a dispersion medium, introducing the same into a commercially available laser diffraction particle size measurement device (e.g., Microtrac MT 3000) and irradiating ultrasonic waves at about 28 kHz and an output of 60 W, a volume cumulative particle size distribution graph is obtained, from which a particle size corresponding to 50% of the volume accumulation is obtained, and thus the average particle diameter (D₅₀) may be measured.

In addition, the first lithium manganese-based oxide has a BET specific surface area ranging from 1.0 m²/g to 1.8 m²/g, 1.0 m²/g to 1.7 m²/g, 1.2 m²/g to 1.7 m²/g, or 1.3 m²/g to 1.6 m²/g. The second lithium manganese-based oxide has a BET specific surface area ranging from 1.5 m²/g to 2.3 m²/g, 1.5 m²/g to 2.1 m²/g, 1.5 m²/g to 2.0 m²/g, or 1.6 m²/g to 1.9 m²/g. The range of the BET specific surface of the first lithium manganese-based oxide and the range of the BET specific surface area of the second lithium manganese-based oxide may be determined by any combination of the above-mentioned numerical ranges.

In addition, the absolute value of the difference (ΔBET) in BET specific surface area between the first lithium manganese-based oxide and the second lithium manganese-based oxide may be in the range of from 0.8 m²/g or less, 0.6 m²/g or less, 0.5 m²/g or less, or 0.4 m²/g or less. The BET surface area can be calculated by a known measurement method. For example, the BET surface area can be calculated by measuring the amount of nitrogen gas adsorbed on the surface of each of the first lithium manganese oxide and the second lithium manganese oxide.

Since the first lithium manganese-based oxide, which is a small particle, has more pores in particle and/or between particles than the second lithium manganese-based oxide, which is a large particle, and has a large specific surface area relative to a particle size, there is a high possibility of side reactions with the electrolyte solution. Therefore, when the selective growth of primary particles constituting the first lithium manganese-based oxide is induced by substituting at least some of the oxygens present in the first lithium manganese-based oxide with a halogen (e.g., fluorine), it is possible to reduce the specific surface area of the first lithium manganese-based oxide. In addition, as described above, since the first lithium manganese-based oxide, which is a small particle, has more pores in particles and/or between particles than the second lithium manganese-based oxide, which is a large particle, the growth effect (a decrease in porosity in particles as the primary particles have grown) of primary particles caused by substituting at least some of the oxygens present in the first lithium manganese-based oxide with a halogen (e.g., fluorine) may be significant.

Unless defined otherwise, the term "surface of the primary particle" used herein means the outer surface of the primary particle exposed to the outside. Likewise, the term "surface of the secondary particle" used herein refers to the outer surface of the secondary particle exposed to the outside. Here, the "surface of the secondary particle" formed by aggregating a plurality of primary particles correspond to the exposed surface of the primary particle present on the surface region of the secondary particle.

In addition, unless defined otherwise, the term "surface region of a particle" used herein refers to the area relatively close to the "outermost surface" of a particle, and the "center of a particle" refers to the area relatively closer to the "exact center" of a particle, compared to the "surface region". Accordingly, the "surface region of the primary particle" refers to the area relatively closed to the "outermost surface" of the primary particle, and the "center of the primary particle" refers to the region relatively closer to the "exact center" of the primary particle, compared to the "surface region". Likewise, the "surface region of a secondary particle" refers to the region relatively close to the "outermost surface" of the secondary particle, and the "center of a secondary particle" refers to the area relatively closer to the "exact center" of the secondary particle, compared to the "surface region".

Here, the area excluding the "surface region of a particle" in any particle may be defined as the "center of a particle".

For example, when the radius of the primary particle is r, the area where the distance from the surface of the primary particle is 0 to 0.5r may be defined as the surface region of the primary particle, and the region where a distance from the exact center of the primary particle is 0 to 0.5r may be defined as the center of the primary particle. When the radius of the primary particle is 0.5 µm, the surface region of the primary particle is the region where the distance from the surface of the primary particle ranges from 0 to 0.25 µm, and the exact center of the primary particle may be defined as the region where the distance from the exact center of the primary particle ranges from 0 to 0.25 µm.

In addition, as needed, when the radius of the primary particle is r, the region in which the distance from the surface of the primary particle ranges from 0 to 0.1r or 0 to 0.2r is defined as the surface region of the primary particle, and the region in which the distance from the exact center of the primary particle ranges from 0 to 0.2r or 0 to 0.5r may be defined as the center of the primary particle.

Likewise, when the radius of the secondary particle is r, the area where the distance from the surface of the secondary particle ranges from 0 to 0.5r may be defined as the surface region of the secondary particle, and the region where a distance from the exact center of the secondary particle ranges from 0 to 0.5r may be defined as the center of the secondary particle. When the radius of the secondary particle is 2.0 µm, the surface region of the secondary particle is the region where the distance from the surface of the secondary particle ranges from 0 to 1.0 µm, and the center of the secondary particle may be defined as the region where the distance from the exact center of the secondary particle ranges from 0 to 1.0 µm.

In addition, as needed, when the radius of the secondary particle is r, the area where the distance from the surface of the secondary particle ranges from 0 to 0.1r or 0 to 0.2r may be defined as the surface region of the secondary particle, and the region where a distance from the exact center of the secondary particle ranges from 0 to 0.2r or 0 to 0.5r may be defined as the center of the secondary particle.

In one embodiment, among the first lithium manganese-based oxide and the second lithium manganese-based oxide, constituting the positive electrode active material, the first lithium manganese-based oxide may be selectively substituted by a halogen. Here, the selective substitution of the first lithium manganese-based oxide with a halogen refers that the first lithium manganese-based oxide of the positive electrode active material is substituted by a halogen, while the second lithium manganese-based oxide is not substituted by a halogen.

Specifically, at least some of the oxygens present in the first lithium manganese-based oxide are substituted by halogens.

Accordingly, the first lithium manganese-based oxide may be represented by Chemical Formula 1 or Chemical Formula 1-1 below. In addition, the composition represented by Chemical Formula 1 or Chemical Formula 1-1 below may be an average composition that reflects the composition of a barrier layer present on the surface of the first lithium manganese-based oxide.

[Chemical Formula 1] Li(LiₐM1ₓM2_{y})O_{2-b}X_{b}

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1, X is a halogen that can replace at least some of the oxygens present in the lithium manganese-based oxide, 0<a≤0.7, 0<b≤0.1, 0<x≤1, 0≤y<1, and 0<x+y≤1. It is to be understood that typically at least one of M1 and M2 is an element other than manganese.

[Chemical Formula 1-1] rLi₂MnO_{3-b"}X'_{b"}·(1 -r)Li_{a'}M1_{x'}M_{2y'}O_{2-b'}X_{b'}

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1, X and X' are halogens that can replace at least some of the oxygens present in the lithium manganese-based oxide, 0<r≤0.7, 0<a'≤1, 0≤b'≤0.1, 0≤b"≤0.1, 0<x'≤1, 0≤y'< 1, 0<x'+y'≤1, and b' and b" are not 0 at the same time. It is to be understood that typically at least one of M1 and M2 (preferably M1) is an element other than manganese.

X and X' are each independently halogens that can replace at least some of the oxygens present in the lithium manganese-based oxide. The types of halogens that can be used as X and X' are referred to the periodic table, and may be F, Cl, Br and/or I, and preferably, F.

As described above, when halogen doping is performed to induce the particle growth of the primary particles constituting the first lithium manganese-based oxide, preferably, at least some of the oxygens present in the first lithium manganese-based oxide may be substituted by halogens.

When an over-calcinating method for performing heat treatment at a relatively high temperature is used without halogen doping to induce the growth of the primary particles constituting the first lithium manganese-based oxide, although the particle growth of the primary particles is possible, the crystal structure of the primary particle is damaged and thus the early deterioration of the first lithium manganese-based oxide may occur.

In addition, the growth of the primary particles is non-directional in the over-calcination method, whereas when halogen doping is performed during the growth of the primary particles, the growth of the primary particles shows some directionality, thereby mitigating the decrease in the diffusivity of lithium ions due to the growth of the primary particles. Particularly, for the growth of the primary particles, the use of fluorine as an anionic dopant is preferable in terms of inducing crystal growth or particle growth in a selective direction of the primary particles within the range of mitigating the decrease in diffusivity of lithium ions by means of the primary particles.

For fluorine doping to the primary particles, at least one selected from LiF, MgF₂, HF, F₂, XeF₂, TbF₄, CeF₄, CoF₃, AgF₂, MoF₃, AgF, CuF₂, FeF₃, CuF, VF₃, CrF₃, ZrF₄, BaF₂, CaF₂, AlF₃, NH₄F, CeF₃, and CsF, and preferably, at least one anionic dopant selected from LiF and MgF₂ may be used.

In Chemical Formula 1, when M1 is Ni, M2 may include Mn, and when M1 is Mn, M2 may include Ni. In addition, when M1 is Ni and Mn, M2 is not present, or if present, M2 may be an element, excluding Ni and Mn.

That is, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and more preferably, at least one selected from P, B, and Si) and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and more preferably, at least one selected from P, B, and Si), and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si.

On the other hand, the second lithium manganese-based oxide may be represented by Chemical Formula 2 below.

[Chemical Formula 2] rLi₂MnO₃·(1-r)Li_{a'}M1_{x'}M2_{y}O₂

Here, M1 is at least one selected from Ni and Mn, M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, M2 does not overlap M1, 0<r≤0.7, 0<a'≤1, 0<x'≤1, 0≤y'< 1, and 0<x'+y'≤1.

Since the second lithium manganese-based oxide, which is a large particle, has insufficient pores in particles and/or between particles compared to the first lithium manganese-based oxide, which is a small particle, it may be difficult to induce the growth of primary particles caused by substituting at least some of the oxygens present in the second lithium manganese-based oxide with halogens (e.g., fluorine).

In addition, unlike the first lithium manganese-based oxide, when a halogen (e.g., fluorine) is doped into the second lithium manganese-based oxide, the electrochemical properties (e.g., decreases in capacity and efficiency) of the positive electrode active having bimodal particle size distribution, defined herein, may be even reduced.

Likewise, in Chemical Formula 2, when M1 is Ni, M2 may include Mn, and when M1 is Mn, M2 may include Ni. In addition, when M1 is Ni and Mn, M2 may not be present, or if present, M2 may be an element, excluding Ni and Mn.

That is, when M1 is Ni, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Mn.

When M1 is Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd (preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si), and Ni.

When M1 is Ni and Mn, M2 may include at least one selected from Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, preferably, at least one selected from Co, Al, P, Nb, B, Si, Ti, Zr, Ba, K, Mo, and W, more preferably, at least one selected from Co, P, B, Si, Ti, Zr, and W, and even more preferably, at least one selected from P, B, and Si.

The lithium manganese-based oxide represented by Chemical Formula 1, Chemical Formula 1-1, or Chemical Formula 2 may optionally include cobalt. When the lithium manganese-based oxide includes cobalt, the mole fraction of the cobalt with respect to the mole number of all metal elements in the lithium manganese-based oxide may be 20% or less, preferably, 15% or less, and more preferably, 10% or less. In other cases, the lithium manganese-based oxide represented by Chemical Formula 1 may have a cobalt-free composition, not including cobalt.

The Li/Metal molar ratios measured from the lithium manganese-based oxide represented by Chemical Formula 1, Chemical Formula 1-1, or Chemical Formula 2 may be more than 1, 1.1 in the range of from 1.6, 1.1 to 1.5, 1.2 to 1.6, or 1.2 to 1.5. It is possible to form an overlithiated lithium manganese-based oxide only when the Li/Metal molar ratio measured from the lithium manganese-based oxide is at least greater than 1.

In addition, in order for the lithium manganese-based oxides to properly form solid solutions in which a phase belonging to a C2/m space group and a phase belonging to a R-3m space group are dissolved or complexed and at the same time, exhibit a high capacity under a high-voltage operating environment, the Li/Metal molar ratios of the lithium manganese-based oxides are preferably in the range of from 1.1 to 1.6, 1.1 to 1.5, 1.2 to 1.6, or 1.2 to 1.5.

In addition, to properly form a solid solution in which a phase belonging to a C2/m space group and a phase belonging to a R-3m space group are dissolved, the content of manganese among all metal elements excluding lithium, present in the lithium manganese-based oxide, is preferably 50 mol% or more.

In order for the lithium manganese-based oxide to have the characteristics of OLO exhibiting a high capacity under a high-voltage operating environment, the content of manganese among all metal elements excluding lithium, present in the lithium manganese-based oxide, may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% to 75 mol%, 51 mol% to 75 mol%, 52 mol% to 75 mol%, 53 mol% to 75 mol%, 54 mol% to 75 mol%, or 55 mol% to 75 mol%.

When the content of manganese in the lithium manganese-based oxide exceeds 80 mol%, a phase transition may occur due to the migration of a transition metal (particularly, manganese) in the lithium manganese-based oxide during the formation and/or operation of a lithium secondary battery. As such a phase transition occurs a spinel phase, the spinel phase acting as impurities in the lithium manganese-based oxide may induce a decrease in charge/discharge capacity or voltage decay during the cycling of a lithium secondary battery. In addition, as the content of manganese in the lithium manganese-based oxide exceeds 80 mol%, there is a risk that the lithium manganese-based oxide may exhibit characteristics close to a composite oxide with a spinel crystal structure belonging to the Fd-3m space group (e.g., LiMn₂O₄ or an oxide having a similar composition thereto).

To properly form the solid solution in which the phase belonging to the C2/m space group and the phase belonging to the R-3m space group are dissolved, the content of nickel among all metal elements, excluding lithium, present in the lithium manganese-based oxide may be less than 50 mol%, 48 mol% or less, 46 mol% or less, 45 mol% or less, 44 mol% or less, 42 mol% or less, or 40 mol% or less.

When the content of nickel in the lithium manganese-based oxide is 50 mol% or more, it may be difficult to sufficiently form the C2/m phase, or the phase belonging to the C2/m space group and the phase belonging to the R-3m space group may not form a sufficient solid solution, which may cause a phase separation during the formation and/or operation of the lithium secondary battery.

Generally, in the commercially-available ternary lithium composite oxide with a nickel-cobalt-manganese (NCM) or nickel-cobalt-aluminum (NCA) composition, the phase belonging to the R-3m space group is present as a single phase.

On the other hand, the overlithiated lithium manganese-based oxide represented by Chemical Formula 1, Chemical Formula 1-1, or Chemical Formula 2 is present as a composite oxide in which an oxide of a phase belonging to the C2/m space group represented by rLi₂MnO_{3-b"}X'_{b"} or rLi₂MnO₃ (hereinafter, referred to as 'C2/m phase') and an oxide of a phase belonging to the R-3m space group represented by (1-r)Li_{a'}M1_{x'}M2_{y'}O_{2-b'}X_{b'} or (1-r)Li_{a'}M1_{x'}M2_{y}O₂ (hereinafter, referred to as 'R-3m phase') are dissolved. For example, the lithium manganese-based oxide may be present in the state in which a solid solution is formed with the oxide of the C2/m phase and the oxide of the R-3m phase.

Here, a composite oxide in which the phase belonging to the C2/m space group and the phase belonging to the R-3m space group are simply physically and/or chemically bonded or attached does not correspond to the solid solution defined therein.

For example, a composite oxide having a phase belonging to the C2/m space group whose surface is coated with a metal oxide with a phase belonging to the R-3m space group by mixing a metal oxide having a phase belonging to the C2/m space group and a metal oxide with a phase belonging to the R-3m space group does not correspond to the solid solution defined herein.

In the lithium manganese-based oxide, when r is more than 0.7, the proportion of the C2/m phase in the lithium manganese-based oxide is excessively large, resulting in increasing the irreversible capacity and resistance of the positive electrode active ingredient, and therefore there is a risk of reducing a discharge capacity. That is, to improve surface kinetics by sufficiently activating a C2/m-phase oxide with relatively high resistance in the lithium manganese-based oxide, the R-3m phase oxide is preferably present in a predetermined proportion or more.

In one embodiment, there are barrier layers on the surfaces of the first lithium manganese-based oxide and the second lithium manganese-based oxide. The barrier layers may inhibit or mitigate the elution of transition metals from the first lithium manganese-based oxide and the second lithium manganese-based oxide. In addition, as the barrier layers cover the surfaces of the first lithium manganese-based oxide and the second lithium manganese-based oxide, the side reactions with the electrolyte solution may be prevented and the charge-transfer and/or dispersibility (i.e., surface kinetics) of lithium ions may be improved.

The barrier layers may be present in the form of an island, which covers at least a part of the surfaces of the first lithium manganese-based oxide and the second lithium manganese-based oxide. Even when the barrier layer is present in the form of an island, the elution of transition metals may be inhibited or mitigated due to the area covered by the barrier layer.

In addition, when the first lithium manganese-based oxide and the second lithium manganese-based oxide are present as secondary particles, the barrier layer may be present in a diffusion state from the surface region of the secondary particle toward the center of the secondary particle along the grain boundaries between the primary particles. The main element constituting the barrier layer (e.g., at least one selected from boron (B), silicon (Si), phosphorus (P), and germanium (Ge), and preferably, boron (B)) may form a concentration gradient decreasing from the (outermost) surface of the secondary particle to the inside of the secondary particle.

As the barrier layer has a gradient from the surface region of the secondary particle to the center of the secondary particle, mostly, the elution of transition metals from the surface region of the secondary particle may be effectively inhibited or mitigated.

Therefore, when the main element constituting the barrier layer (e.g., at least one selected from boron (B), silicon (Si), phosphorus (P), and germanium (Ge)) is referred to as a barrier element, the atomic ratio of the barrier element calculated based on the atomic numbers of nickel, manganese, and the barrier element, present in the secondary particle, may be smaller than that of the barrier element calculated based on the atomic number of nickel, manganese, and the barrier element present on the surface of the secondary particle. In addition, the atomic ratio of the barrier element calculated based on the total atomic number of nickel, manganese, and the barrier element, constituting the secondary particle, may be smaller than the atomic ratio of the barrier element calculated based on the atomic number of nickel, manganese, and the barrier element, present on the (outermost) surface of the secondary particle.

In some embodiments, some of the main element constituting the barrier layer (e.g., at least one selected from boron (B), silicon (Si), phosphorus (P), and germanium (Ge), and preferably, boron (B)) may be present at high concentrations on the surface of the primary particle, compared to the inside of the primary particle.

Accordingly, when the main element constituting the barrier layer (e.g., at least one selected from boron (B), silicon (Si), phosphorus (P), and germanium (Ge)) is referred to as a barrier element, the atomic ratio of the barrier element calculated based on the atomic numbers of nickel, manganese, and the barrier element, present in the primary particle, may be smaller than that of the barrier element calculated based on the atomic number of nickel, manganese, and the barrier element, present on the surface of the primary particle. In addition, the atomic ratio of the barrier element calculated based on the total atomic number of nickel, manganese, and the barrier element, constituting the primary particle, may be smaller than the atomic ratio of the barrier element calculated based on the atomic number of nickel, manganese, and the barrier element, present on the (outermost) surface of the primary particle.

In addition, the barrier layer may be present in the form of a coating film having a thickness in the range of from 1 nm to 300 nm on the surfaces of the first lithium manganese-based oxide and the second lithium manganese-based oxide. This means that the thickness of the barrier layer at any location on the surface of the lithium manganese-based oxide can be from 1 to 300 nm. That is, at any location on the surface of the lithium manganese-based oxide where the barrier layer exists, the barrier layer can have a thickness of at least 1 nm and at most 300 nm. In addition, the presence of the barrier layer in the form of a coating film has to be distinguished from the dispersion or attachment of the oxides constituting the barrier layer in the form of individual particles on the lithium manganese-based oxide.

When the average thickness of the barrier layer is smaller than 1 nm, it may be difficult to sufficiently inhibit the elution of transition metals from the first lithium manganese-based oxide and the second lithium manganese-based oxide. On the other hand, when the average thickness of the barrier layer is larger than 300 nm, there is a risk that the surface kinetics of the first lithium manganese-based oxide and the second lithium manganese-based oxide may be reduced, or the electrical conductivity may be lowered.

In addition, as the thickness of the barrier layer present on the surface of the lithium manganese-based oxide increases, the elution of transition metals from the lithium manganese-based oxide may be prevented, thereby improving the short-term lifetime of a lithium secondary battery using the lithium manganese-based oxide as a positive electrode active material. However, when the thickness of the barrier layer excessively increases (e.g., more than 300 nm), there may be a problem in that the amount of gas generation in the lithium secondary battery may rapidly increase.

The barrier layer may include an oxide including at least one element selected from B, Si, P, and Ge.

For example, the barrier layer may include an oxide represented by Chemical Formula 3 below. Preferably the barrier layer includes at least 80 wt.%, more preferably at least 90 wt% of the oxide represented by Chemical Formula 3 below, relative to the total weight of the barrier layer.

[Chemical Formula 3] zLi₂O*(1-z)M3_{d}Oₑ

Here, M3 is at least one element selected from B, Si, P, and Ge, 0<z≤0.8, 0<d≤10, and 0<e≤10. Here, d and e represent the numbers determined from the stoichiometric ratio depending on the mantissa of M3.

In addition, preferably, the barrier layer includes at least one boron-containing compound selected from B₂O₃, H_{α}B_{β}O_{γ} (0<α<10, 0<β<10, 0<γ<20), and Li_{α'}B_{β'}O_{γ'} (0<α'<10, 0<β'<10, 0<γ'<20). Here, α, β, γ, α', β' and γ' represent the numbers determined from the stoichiometric ratio. Non-limiting examples of the boron-containing compound include H₃BO₃, B₂O₃, Li₂O-B₂O₃, Li₃BO₃, Li₂B₄O₇, Li₂B₂O₇, and Li₂B₈O₁₃.

The positive electrode active material of the present invention is preferably obtainable by mixing the first lithium manganese-based oxide and the second lithium manganese-based oxide.

The first lithium manganese-based oxide if preferably obtainable by a method comprising the steps of
(a) providing a lithium manganese-based oxide partially having a phase with a C2/m space group and a phase having a R-3m space group, wherein the lithium manganese-based oxide has a molar content of fluorine (e.g., in the form of one or more fluorine containing compounds) of 0.03 to 1.5 mol%, based on all metal elements of the lithium manganese-based oxide excluding lithium;
(b) mixing the lithium manganese-based oxide with boric acid or a borate,
(c) heat treating the mixture obtained in step (b) at a temperature in the range of from 250 to 550°C, and
(d) optionally pulverizing.

In step (a), the lithium manganese-based oxide is preferably a lithium nickel manganese oxide, preferably with a molar ratio of Ni to Mn in the range of 0.5 to 0.8, preferably 0.60 to 0.72, more preferably 0.63 to 0.70, still more preferably 0.65 to 0.68, and preferably with a molar ratio of Li to the sum of Ni and Mn in the range of from 1 to 1.5, preferably 1.1 to 1.4, more preferably 1.2 to 1.35, even more preferably 1.25 to 1.30. The lithium manganese-based oxide preferably has a molar content of fluorine of 0.5 to 1.2 mol%, based on all metal elements of the lithium manganese-based oxide excluding lithium.

In step (b) the lithium manganese-based oxide is preferably mixed with boric acid. The amount of boric acid or borate is preferably adjusted to obtain a molar ratio of boron to the molar amount of all metals other than Li is in the range of 0.005 to 0.05, preferably 0.01 to 0.03, more preferably 0.01 to 0.02.

In step (c) the heat treating of the mixture obtained in step (b) is preferably at a temperature in the range of from 300 to 500°C, more preferably 350 to 450°C, for a duration of from 2 to 24 hours, preferably from 3 to 12 hours. The heat-treatment is preferably conducted in an oxygen-containing atmosphere.

More preferably, the first lithium manganese-based oxide of the present invention is obtainable by a method comprising the steps of
(i) preparing particles having a chemical composition expressed by Ni₁₋ₘ₁Mnₘ₁(OH)₂, wherein 0.2≤m1≤0.9,
(ii) heat treating the particles at a temperature in the range of from 400 to 700°C,
(iii) mixing the heat-treated particles with a lithium compound at a molar ratio of Li to metals other than Li in the range of from 1 to 1.5, and with a fluorine compound such that the fluorine amount is 0.03 to 1.5 mol%, based on all metal elements excluding lithium in the heat-treated particles,
(iv) heat treating the mixture obtained in step (iii) at a temperature in the range of from 750 to 1050°C,
(v) mixing the product of step (iv) with boric acid or a borate,
(vi) heat treating the mixture obtained in step (vi) at a temperature in the range of from 250 to 550°C, and
(vii) optionally pulverizing.

In step (i) the particles preferably have a chemical composition expressed by Ni₁₋ₘ₁Mnₘ₁(OH)₂, 0.4≤m1≤0.8, preferably 0.5≤m1≤0.7, more preferably 0.55≤m1≤0.65.

In step (ii) heat treating the particles is preferably conducted at a temperature in the range of from 500 to 600°C. The duration of the heat treatment is preferably from 1 to 24 hours, more preferably from 2 to 10 hours. The heat treatment is preferably conducted in an oxygen-containing atmosphere.

In step (iii) the heat-treated particles are preferably mixed with LiOH. The molar ratio of Li to metals other than Li is preferably in the range of from 1 to 1.5, more preferably 1.1 to 1.4, even more preferably 1.2 to 1.35, still more preferably 1.25 to 1.30. The fluorine compound is preferably LiF. The amount of the fluorine compound is preferably such that the fluorine amount is 0.5 to 1.2 mol%, based on all metal elements excluding lithium in the heat-treated particles,

In step (iv) heat treating the mixture obtained in step (iii) is preferably conducted at a temperature in the range of from 750 to 1050°C, more preferably 850 to 950°C. The heat treatment is preferably conducted for a duration of from 2 to 24 hours, more preferably from 3 to 12 hours The heat treatment is preferably conducted in an oxygen-containing atmosphere.

In step (v) the product of step (iv) is preferably mixed with boric acid. The amount of boric acid or borate is preferably adjusted to obtain a molar ratio of boron to the molar amount of all metals other than Li is in the range of 0.005 to 0.05, preferably 0.01 to 0.03, more preferably 0.01 to 0.02.

In step (vi) heat treating the mixture obtained in step (vi) is preferably conducted at a temperature in the range of from 300 to 500°C, preferably 350 to 450°C. The heat treatment is preferably conducted for a duration of from 2 to 24 hours, preferably from 3 to 12 hours. The heat treatment is preferably conducted in an oxygen-containing atmosphere.

The second lithium manganese-based oxide may be obtained by the same method as set out above for the first lithium manganese-based oxide. Preferably, the second lithium manganese-based oxide is obtained by the same method as set out above for the first lithium manganese-based oxide, except that the addition of the fluorine compound(s) is omitted.

Thus, the second lithium manganese-based oxide if preferably obtainable by a method comprising the steps of
(a) providing a lithium manganese-based oxide partially having a phase with a C2/m space group and a phase having a R-3m space group,
(b) mixing the lithium manganese-based oxide with boric acid or a borate,
(c) heat treating the mixture obtained in step (b) at a temperature in the range of from 250 to 550°C, and
(d) optionally pulverizing.

In step (a) of the above method for preparing the second lithium manganese-based oxide, the lithium manganese-based oxide provided in step (a) preferably has a molar content of fluorine (e.g. in the form of one or more fluorine containing compounds) of less than 0.02 mol% (or even less than 0.01 mol%), based on all metal elements of the lithium manganese-based oxide excluding lithium.

More preferably, the second lithium manganese-based oxide of the present invention is obtainable by a method comprising the steps of
(i) preparing particles having a chemical composition expressed by Ni₁₋ₘ₁Mnₘ₁(OH)₂, wherein 0.2≤m1≤0.9,
(ii) heat treating the particles at a temperature in the range of from 400 to 700°C,
(iii) mixing the heat-treated particles with a lithium compound at a molar ratio of Li to metals other than Li in the range of from 1 to 1.5,
(iv) heat treating the mixture obtained in step (iii) at a temperature in the range of from 750 to 1050°C,
(v) mixing the product of step (iv) with boric acid or a borate,
(vi) heat treating the mixture obtained in step (vi) at a temperature in the range of from 250 to 550°C, and
(vii) optionally pulverizing.

It is to be understood that the preferred embodiments of the method of preparing the second lithium manganese-based oxide are the same as for the method of preparing the first lithium manganese-based oxide.

### Lithium secondary battery

According to another aspect of the present invention, a positive electrode that includes a positive electrode current collector and a positive electrode active material layer formed on the positive electrode current collector may be provided. Here, the positive electrode active material layer may include a lithium manganese-based oxides according to various embodiments of the present invention.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness in the range of from 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke, or copper or stainless steel whose surface is treated with carbon, nickel, titanium or silver, or an aluminum-cadmium alloy. In addition, the negative electrode current collector may generally have a thickness in the range of from 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated-EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has a low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Z₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

### Preparation Example 1. Preparation of positive electrode active material

### Preparation of first lithium manganese-based oxide (A-1)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 5 hours. After the reaction was completed, washing and dehydration of the formed precipitate were performed by using filter press (F/P) apparatus, thereby obtaining a hydroxide precursor (average particle diameter: 3.0 µm) with the composition of Ni_{0.4}Mn_{0.6}(OH)₂. The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the oxide precursor obtained in (b) and LiOH (Li/Metal (excluding Li) molar ratio = 1.28) as a lithium raw material.

Subsequently, a first lithium manganese-based oxide (A-1) was obtained by raising the temperature of a furnace with an O₂ atmosphere and containing the mixture at a rate of 2 °C/min, thermally treating the mixture for 8 hours while maintaining the temperature at 900 °C, and performing furnace cooling.

The BET specific surface area (calculated from the nitrogen gas adsorption at a liquid nitrogen temperature (77K) using BELSORP-mini II (BEL Japan)) of the first lithium manganese-based oxide (A-1) was measured to be 1.93 m²/g.

### Preparation of first lithium manganese-based oxide (A-2)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 5 hours. After the reaction was completed, washing and dehydration of the formed precipitate were performed by using filter press (F/P) apparatus, thereby obtaining a hydroxide precursor (average particle diameter: 3.0 µm) with the composition of Ni_{0.4}Mn_{0.6}(OH)₂. The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the precursor in an oxide state obtained in (b), LiOH (Li/Metal (excluding Li) molar ratio = 1.28) as a lithium raw material, and LiF in which the content of fluorine (F) was weighed to 1.0 mol% based on metal elements excluding lithium in the precursor.

Subsequently, the temperature of a furnace with an O₂ atmosphere and containing the mixture was raised at a rate of 2 °C/min, the mixture was thermally treated for 8 hours while maintaining the temperature at 900 °C, and then furnace cooling was performed, thereby obtaining a first lithium manganese-based oxide (A-2).

The BET specific surface area (calculated from the nitrogen gas adsorption at a liquid nitrogen temperature (77K) using BELSORP-mini II (BEL Japan)) of the first lithium manganese-based oxide (A-2) was measured to be 1.72 m²/g.

### Preparation of first lithium manganese-based oxide (A-3)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 5 hours. After the reaction was completed, washing and dehydration of the precipitate were performed by using filter press (F/P) apparatus, thereby obtaining a hydroxide precursor with the composition of Ni_{0.4}Mn_{0.6}(OH)₂ (average particle diameter: 3.0 µm). The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the precursor in an oxide state obtained in (b), LiOH (Li/Metal (excluding Li) molar ratio = 1.28) as a lithium raw material, and LiF in which the content of fluorine (F) was weighed to 1.0 mol% based on metal elements excluding lithium in the precursor.

Subsequently, the temperature of a furnace with an O₂ atmosphere and containing the mixture was raised at a rate of 2 °C/min, the mixture was thermally treated for 8 hours while maintaining the temperature at 900 °C, and then furnace cooling was performed, thereby obtaining an overlithiated lithium manganese-based oxide.

### (d) Third heat treatment (Formation of barrier layer)

After mixing the lithium manganese-based oxide obtained in (c) and H₃BO₃ (the boron content was measured to be 2 mol% based on the total elements, excluding lithium, of the lithium manganese-based oxide), the mixture was thermally treated for 8 hours in a furnace while maintaining an O₂ atmosphere and raising the temperature up to 400 °C at 4.4 °C/min, classified, and then disintegrated, thereby obtaining a first lithium manganese-based oxide (A-3) having a barrier layer including a B-containing compound on its surface.

The BET specific surface area (calculated from the nitrogen gas adsorption at a liquid nitrogen temperature (77K) using BELSORP-mini II (BEL Japan)) of the first lithium manganese-based oxide (A-3) was measured to be 1.43 m²/g.

### Preparation of first lithium manganese-based oxide(A-4)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 5 hours. After the reaction was completed, washing and dehydration of the precipitate were performed by using filter press (F/P) apparatus, thereby obtaining a hydroxide precursor (average particle diameter: 3.0 µm) with the composition of Ni_{0.4}Mn_{0.6}(OH)₂. The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the precursor in an oxide state obtained in (b), LiOH (Li/Metal (excluding Li) molar ratio = 1.28) as a lithium raw material, and LiF in which the content of fluorine (F) was weighed to 0.75 mol% based on metal elements excluding lithium in the precursor.

Subsequently, the temperature of a furnace with an O₂ atmosphere and containing the mixture was raised at a rate of 2 °C/min, the mixture was thermally treated for 8 hours while maintaining the temperature at 900 °C, and then furnace cooling was performed, thereby obtaining an overlithiated lithium manganese-based oxide.

### (d) Third heat treatment (Formation of barrier layer)

After mixing the lithium manganese-based oxide obtained in (c) and H₃BO₃ (the boron content was measured to be 2 mol% based on the total elements, excluding lithium, of the lithium manganese-based oxide), the mixture was thermally treated for 8 hours in a furnace while maintaining an O₂ atmosphere and raising the temperature up to 400 °C at 4.4 °C/min, classified, and then disintegrated, thereby obtaining a first lithium manganese-based oxide (A-4) having a barrier layer including a B-containing compound on its surface.

The BET specific surface area (calculated from the nitrogen gas adsorption at a liquid nitrogen temperature (77K) using BELSORP-mini II (BEL Japan)) of the first lithium manganese-based oxide (A-4) was measured to be 1.50 m²/g.

### Preparation of second lithium manganese-based oxide (B-1)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 24 hours. After the reaction was completed, washing and dehydration of the precipitate were performed by using filter press (F/P) apparatus, thereby obtaining a hydroxide precursor with the composition of Ni_{0.4}Mn_{0.6}(OH)₂ (average particle diameter: 12.0 µm). The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the precursor in an oxide state obtained in (b) and LiOH (Li/Metal (excluding Li) molar ratio = 1.28), which is a lithium raw material.

Subsequently, the temperature of a furnace with an O₂ atmosphere and containing the mixture was raised at a rate of 2 °C/min, the mixture was thermally treated for 8 hours while maintaining the temperature at 900 °C, and then furnace cooling was performed, thereby obtaining a second lithium manganese-based oxide (B-1).

The BET specific surface area (calculated from the nitrogen gas adsorption at a liquid nitrogen temperature (77K) using BELSORP-mini II (BEL Japan)) of the second lithium manganese-based oxide (B-1) was measured to be 2.38 m²/g.

### Preparation of second lithium manganese-based oxide (B-2)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 24 hours. After the reaction was completed, washing and dehydration of the precipitate were performed by using filter press (F/P) apparatus, thereby obtaining a hydroxide precursor (average particle diameter: 12.0 µm) with the composition of Ni_{0.4}Mn_{0.6}(OH)₂. The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere and containing the mixture at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the precursor in an oxide state obtained in (b), LiOH (Li/Metal (excluding Li) molar ratio = 1.28) as a lithium raw material, and LiF in which the content of fluorine (F) was weighed to 1.0 mol% based on metal elements excluding lithium in the precursor.

Subsequently, the temperature of a furnace with an O₂ atmosphere was raised at a rate of 2 °C/min, the mixture was thermally treated for 8 hours while maintaining the temperature at 900 °C, and then furnace cooling was performed, thereby obtaining a second lithium manganese-based oxide (B-2).

The BET specific surface area (calculated from the nitrogen gas adsorption at a liquid nitrogen temperature (77K) using BELSORP-mini II (BEL Japan)) of the second lithium manganese-based oxide (B-2) was measured to be 0.86 m²/g.

### Preparation of second lithium manganese-based oxide (B-3)

### (a) Preparation of precursor

An aqueous solution in which NiSO₄·6H₂O and MnSO₄·H₂O were mixed in a molar ratio of 40:60, NaOH (aq) and NH₄OH (aq) were added to a reactor and stirred. The temperature in the reactor was maintained at 45 °C, and a N₂ gas was introduced into the reactor to perform a precursor synthesis reaction for 24 hours. After the reaction was completed, washing and dehydration of the precipitate were performed by using filter press (F/P) apparatus, thereby obtaining a hydroxide precursor (average particle diameter: 12.0 µm) with the composition of Ni_{0.4}Mn_{0.6}(OH)₂. The average particle diameter (D₅₀) of the Ni_{0.4}Mn_{0.6}(OH)₂ precursor was measured from a volume cumulative particle size distribution graph obtained by using a laser diffraction method.

### (b) First heat treatment

An oxide precursor was obtained by raising the temperature of a furnace with an O₂ atmosphere at a rate of 2 °C/min, thermally treating the Ni_{0.4}Mn_{0.6}(OH)₂ hydroxide precursor obtained in (a) for 5 hours while maintaining the temperature at 550 °C, and performing furnace cooling.

### (c) Second heat treatment

A mixture was prepared by mixing the precursor in an oxide state obtained in (b) and LiOH (Li/Metal (excluding Li) molar ratio = 1.28), which is a lithium raw material.

Subsequently, the temperature of a furnace with an O₂ atmosphere and containing the mixture was raised at a rate of 2 °C/min, the mixture was thermally treated for 8 hours while maintaining the temperature at 900 °C, and then furnace cooling was performed, thereby obtaining an overlithiated lithium manganese-based oxide.

### (d) Third heat treatment (Formation of barrier layer)

After mixing the lithium manganese-based oxide obtained in (c) and H₃BO₃ (the boron content was measured to be 2 mol% based on the total elements, excluding lithium, of the lithium manganese-based oxide), the mixture was thermally treated for 8 hours in a furnace while maintaining an O₂ atmosphere and raising the temperature up to 400 °C at 4.4 °C/min, classified, and then disintegrated, thereby obtaining a second lithium manganese-based oxide (B-3) having a barrier layer including a B-containing compound on its surface.

The BET specific surface area (calculated from the nitrogen gas adsorption at a liquid nitrogen temperature (77K) using BELSORP-mini II (BEL Japan)) of the second lithium manganese-based oxide (B-3) was measured to be 1.81 m²/g.

### Preparation Example 2. Preparation of positive electrode active material

A positive electrode active material having unimodal particle size distribution or bimodal particle size distribution was prepared by mixing the first lithium manganese-based oxide and the second lithium manganese-based oxide prepared according to Preparation Example 1 in a weight ratio listed in Table 1 below.

In addition, in the case of the positive electrode active material having bimodal particle size distribution, the absolute value of the difference (ΔBET) in BET specific surface area between a first lithium composite oxide, which is a small particle, and a second lithium composite compound, which is a large particle, was calculated.

**[Table 1]**

| Classifica tion | First lithium composite oxide | | | | Second lithium composite oxide | | | ΔBET (m²/g) |
|---|---|---|---|---|---|---|---|---|
| | A-1 (wt%) | A-2 (wt%) | A-3 (wt%) | A-4 (wt%) | B-1 (wt%) | B-2 (wt%) | B-3 (wt%) | |
| Comparat ive Example 1 | 100 | - | - | - | - | - | - | - |
| Comparat ive Example 2 | - | - | - | - | 100 | - | - | - |
| Comparat ive Example 3 | 40 | - | - | - | 60 | - | - | 0.45 |
| Comparat ive Example 4 | - | 40 | - | - | 60 | - | - | 0.66 |
| Comparat ive Example 5 | | | 40 | - | 60 | - | - | 0.95 |
| Comparat ive Example 6 | | | 40 | - | | 60 | | 0.57 |
| Example 1 | - | - | 30 | - | - | - | 70 | 0.38 |
| Example 2 | - | - | - | 40 | - | - | 60 | 0.31 |

### Preparation Example 3. Manufacture of lithium secondary battery (half-cell)

A positive electrode slurry was prepared by dispersing 90 wt% each of the positive electrode active materials prepared according to Preparation Example 2, 4.5 wt% of carbon black and 5.5 wt% of a PVDF binder in N-methyl-2 pyrrolidone (NMP). The positive electrode slurry was uniformly applied on an aluminum thin film with a thickness of 15 µm and dried under vacuum at 135 °C, thereby manufacturing a positive electrode for a lithium secondary battery.

A half-cell was manufactured using lithium foil as a counter electrode for the positive electrode, a porous polyethylene film (Celgard 2300, thickness: 25 µm) as a separator, and an electrolyte solution in which 1.15M LiPF₆ is present in a solvent prepared by mixing ethylene carbonate, dimethyl carbonate and ethyl methyl carbonate in a volume ratio of 2:4:4.

### Preparation Example 4. Manufacture of lithium secondary battery (full-cell)

A positive electrode slurry was prepared by dispersing 90 wt% each of the positive electrode active materials prepared according to Preparation Example 2, 4.5 wt% of carbon black and 5.5 wt% of a PVDF binder in N-methyl-2 pyrrolidone (NMP). The positive electrode slurry was uniformly applied on an aluminum thin film with a thickness of 15 µm and dried under vacuum at 135 °C, thereby manufacturing a positive electrode for a lithium secondary battery.

A full-cell was manufactured using a graphite electrode as a counter electrode for the positive electrode, a porous polyethylene film (Celgard 2300, thickness: 25 µm) as a separator, and an electrolyte solution in which 1.15M LiPF₆ is present in a solvent prepared by mixing ethylene carbonate, dimethyl carbonate and ethyl methyl carbonate in a volume ratio of 2:4:4.

### Experimental Example 1. Measurement of compression density of positive electrode active material

A compression density was measured after compressing 3 g each of the positive electrode active materials prepared in Preparation Example 2 using a pelletizer under 4.5 tons for 5 seconds.

The measurement results are shown in Table 2 below.

**[Table 2]**

| Pressure condition | 4.5 tons |
|---|---|
| Unit | g/cc |
| Comparative Example 1 | 2.39 |
| Comparative Example 2 | 2.47 |
| Comparative Example 3 | 2.66 |
| Comparative Example 4 | 2.69 |
| Comparative Example 5 | 2.74 |
| Comparative Example 6 | 2.82 |
| Example 1 | 2.93 |
| Example 2 | 2.90 |

Referring to the results in Table 2, it was able to be confirmed that, compared to the positive electrode active materials according to Comparative Examples 1 and 2 having unimodal particle size distribution, the positive electrode active materials having bimodal particle size distribution have a higher compression density.

In addition, it was able to be confirmed that the positive electrode active materials according to Examples 1 and 2, which are positive electrode active materials which use a halogen-doped small particle and in which a barrier layer is formed on the surfaces of a small particle and a large particle have higher compression density than positive electrode active materials having different bimodal particle size distributions.

### Experimental Example 2. Evaluation of electrochemical properties of lithium secondary battery (half-cell)

According to charging/discharging experiments performed on each of the lithium secondary batteries (half-cells) manufactured in Preparation Example 3 using an electrochemical analyzer (Toyo, Toscat-3100) at 25 °C in a voltage range of 2.0V to 4.6V at a discharge rate of 0.1C to 5.0C, an initial discharge capacity, a capacity per volume, and a rate performance (rate capability (C-rate)) were measured.

The capacity per volume was calculated by multiplying the initial discharge capacity and the compression density (4.5-ton compression density in Table 4).

The measurement results are shown in Table 3 below.

**[Table 3]**

| Classification | Initial discharge capacity (0.1C-rate) | Capacity per unit volume | Rate capability (2C/0.1C) | Rate capability (5C/0.1C) |
|---|---|---|---|---|
| Unit | mAh/g | mAh/cc | % | % |
| Comparative Example 1 | 218.4 | 522 | 73.6 | 63.2 |
| Comparative Example 2 | 226.8 | 560 | 80.5 | 67.9 |
| Comparative Example 3 | 223.5 | 594 | 77.7 | 67.2 |
| Comparative Example 4 | 226.2 | 609 | 79.6 | 65.5 |
| Comparative Example 5 | 228.4 | 625 | 80.4 | 64.4 |
| Comparative Example 6 | 226.8 | 639 | 78.2 | 64.0 |
| Example 1 | 233.0 | 682 | 80.9 | 67.9 |
| Example 2 | 232.7 | 675 | 80.8 | 67.5 |

Referring to the results in Table 3, it was able to be confirmed that the positive electrode active materials having bimodal particle size distribution have larger capacity per unit volume than the positive electrode active material according to Comparative Examples 1 and 2 having unimodal particle size distribution.

In addition, it was able to be confirmed that the positive electrode active materials according to Examples 1 and 2, which are positive electrode active materials which use a halogen-doped small particle and in which a barrier layer is formed on the surfaces of a small particle and a large particle have larger capacity per unit volume than the positive electrode active materials having different bimodal particle size distributions. In addition, it was able to be confirmed that the positive electrode active materials according to Examples 1 and 2 exhibit better discharge capacity and C-rate than the positive electrode active materials having different bimodal particle size distributions.

### Experimental Example 3. Evaluation of electrochemical properties of lithium secondary battery (full-cell)

Six cycles of formation processes were performed on the lithium secondary batteries (full-cells) manufactured in Preparation Example 4 with the positive electrode active materials according to Example 1, Comparative Example 5, and Comparative Example 6 using an electrochemical analyzer (Toyo, Toscat-3 100) at 25 °C in a voltage range of 2.0V to 4.6V at a discharge rate of 0.2C/0.2C, and then 500 cycles of charge/discharge were performed at 25 °C, a voltage range of2.0V to 4.6V, and a discharge rate of 1 C/1C. The initial (1^{st} cycle) discharge capacity, and the capacity retentions at the 100^{th} cycle, the 300^{th} cycle, and the 500^{th} cycle based on the initial discharge capacity were measured.

The measurement results are shown in Table 4 below.

**[Table 4]**

| Classification | Initial discharge capacity (mAh/g) | Cycle capacity retention (%) | | |
|---|---|---|---|---|
| | | 100th cycle | 300th cycle | 500th cycle |
| Comparative Example 5 | 179.8 | 78.9 | 56.9 | 47.5 |
| Comparative Example 6 | 174.4 | 80.9 | 58.7 | 49.1 |
| Example 1 | 179.3 | 94.4 | 91.2 | 86.9 |

Referring to the results in Table 4, in Comparative Example 5 and Comparative Example 6, it was able to be confirmed that the cycle capacity retentions are lower than that of Example 1. The results are expected to be due to the abnormal resistance to the negative electrode, caused by eluting transition metals from the lithium manganese-based oxide, and the resulting acceleration of the lifetime deterioration of a lithium secondary battery.

Therefore, it was able to be confirmed that the positive electrode active material according to Example 1 is suitable for a lithium secondary battery requiring a longer lifetime.

### Experimental Example 4. Experiment for transition metal elution

Six cycles of formation processes were performed on the lithium secondary batteries (full-cells) manufactured in Preparation Example 4 with the positive electrode active materials according to Example 1, Comparative Example 5, and Comparative Example 6 using an electrochemical analyzer (Toyo, Toscat-3 100) at 25 °C in a voltage range of 2.0V to 4.6V at a discharge rate of 0.2C/0.2C, and then 2 cycles of charge/discharge was performed at 25 °C, a voltage range of 2.0V to 4.6V, and a discharge rate of 0.05C/0.05C to stabilize the lithium secondary battery. Subsequently, after disassembling each full-cell, the negative electrode was washed with a diethylcarbonate solvent and then recovered by drying it under vacuum at 60 °C.

Only the negative electrode active material was separated from the Cu foil (current collector) of the recovered negative electrode, and ICP analysis was performed on the separated negative electrode active material to measure the contents of Ni and Mn included in the negative electrode active material.

In addition, six cycles of formation processes were performed on the lithium secondary batteries (full-cells) manufactured in Preparation Example 4 with the positive electrode active materials according to Example 1, Comparative Example 5, and Comparative Example 6 using an electrochemical analyzer (Toyo, Toscat-3100) at 25 °C in a voltage range of 2.0V to 4.6V at a discharge rate of 0.2C/0.2C, and then 500 cycles of charge/discharge were performed at 25 °C, a voltage range of 2.0V to 4.6V, and a discharge rate of 1C/1C. Subsequently, each full-cell was charged/discharged two cycles at 25 °C in a voltage range of 2.0V to 4.6V at a discharge rate of 0.05C/0.05C to stabilize. Afterward, the full-cell was disassembled, and the negative electrode was washed with a diethylcarbonate solvent and then recovered by drying it under vacuum at 60 °C.

Only the negative electrode active material was separated from the Cu foil (current collector) of the recovered negative electrode, and ICP analysis was performed on the separated negative electrode active material to measure the contents of Ni and Mn included in the negative electrode active material.

The measurement results are shown in Table 5 below.

**[Table 5]**

| | After formation | | After 500 cycles of charge/discharge | |
|---|---|---|---|---|
| Classification | Ni (ppm) | Mn (ppm) | Ni (ppm) | Mn (ppm) |
| Comparative Example 5 | 147 | 150 | 359 | 617 |
| Comparative Example 6 | 143 | 146 | 352 | 544 |
| Example 1 | 144 | 94 | 189 | 399 |

Referring to the results in Table 5, as expected in Experimental Example 4, it was able to be confirmed that, compared to Example 1, the low cycle capacity retentions of Comparative Example 5 and Comparative Example 6 may be due to the increased contents of transition metals precipitated in the negative electrode active material after formation and/or 500 cycles of charge/discharge.

According to the present invention, compared to a commercially available ternary lithium composite oxide with a nickel-cobalt-manganese (NCM) or nickel-cobalt-aluminum (NCA) composition, it is possible to improve the limitations of existing overlithiated lithium manganese-based oxide, which has several disadvantages in terms of electrochemical properties and/or stability.

Specifically, according to the present invention, the lithium manganese-based oxide is prepared into small particles and large particles, and then a bimodal-type positive electrode active material is provided as a mixture of the small particles and the large particles, and thus a low energy density per unit volume of an overlithiated lithium manganese-based oxide can be improved.

In addition, according to the present invention, the elution of transition metals from the small particles and the large particles can be inhibited or mitigated by covering the surfaces of the small particles and the large particle, constituting a positive electrode active material having bimodal particle size distribution with barrier layers.

As the elution of transition metals from the small particles and the large particles can be inhibited or mitigated, it is possible to prevent the transition metals eluted on the surfaces of the small particles and the large particles from reacting with an electrolyte solution to form impurities.

The transition metal eluted from the small particles and the large particles and/or the impurities formed by the reaction between the eluted transition metals and the electrolyte solution can migrate to a negative electrode using the electrolyte solution as a medium, and the impurities can be deposited on the surface of the negative electrode to rapidly increase the resistance of the negative electrode. Accordingly, there is a need to limit the unintended migration of transition metals in a lithium secondary battery as described in the present invention.

That is, according to the present invention, by forming barrier layers on the surfaces of small particles and large particles, it is possible to prevent accelerated deterioration of the lifetime of a lithium secondary battery due to deposition of impurities on a positive electrode and/or a negative electrode via the transition metals eluted from the lithium manganese-based oxide.

In addition, the barrier layers can act as physical barriers between the small and large particles and the electrolyte solution. Particularly, OLO such as the lithium manganese-based oxide has advantages of exerting a high capacity under a high voltage operation environment, and it is important to reduce side reactions between the lithium manganese-based oxide and the electrolyte solution, with the finding that such side reactions between the lithium manganese-based oxide and the electrolyte solution can be promoted as the operating voltage increases.

Therefore, as barrier layers are formed on at least a part of the surfaces of the small particles and the large particles, the stability and lifetime of a lithium secondary battery using a bimodal-type positive electrode active material defined herein can be improved by reducing side reactions between the lithium manganese-based oxide and the electrolyte solution. Particularly, the positive electrode active material with suppressed side reactions with the electrolyte solution enables the lithium secondary battery to operate at a higher voltage.

In addition, according to the present invention, there is an advantage in that side reactions caused by a higher specific surface area of the small particles than the large particles by inducing the selective growth of the small particles in the positive electrode active material having bimodal particle size distribution.

In addition to the above effects, specific effects of the present invention will be described together while explaining specific details for carrying out the present invention.

Although the embodiments of the present invention have been described above, those skilled in the art can modify and change the present invention in various ways by changing, deleting, or adding components without departing from the spirit of the present invention as set forth in the claims, which will also be included within the scope of the rights of the present invention.

## Claims

1. A positive electrode active material having bimodal particle size distribution, comprising a first lithium manganese-based oxide and a second lithium manganese-based oxide, which have different average particle diameters,
wherein the first lithium manganese-based oxide and the second lithium manganese-based oxide are oxides, which include at least lithium and manganese, and in which a phase belonging to the C2/m space group and a phase belonging to the R-3m space group are present,
at least some of the oxygens present in the first lithium manganese-based oxide are substituted by halogens, and
barrier layers are present on the surfaces of the first lithium manganese-based oxide and the second lithium manganese-based oxide.

2. The positive electrode active material of claim 1, wherein the first lithium manganese-based oxide and the second lithium manganese-based oxide are composite oxides including lithium, manganese, and a metal other than manganese.

3. The positive electrode active material of claim 2, wherein the metal is at least one selected from nickel, cobalt, and aluminum.

4. The positive electrode active material of any one of claims 1 to 3, wherein the first lithium manganese-based oxide is doped with fluorine.

5. The positive electrode active material of any one of claims 1 to 4, wherein the first lithium manganese-based oxide is represented by Chemical Formula 1 or Chemical Formula 1-1 below:
[Chemical Formula 1] Li(LiₐM1ₓM2_{y})O_{2-b}X_{b}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1,
X is a halogen optionally replacing some of the oxygens present in the lithium manganese-based oxide,
0<a≤0.7, 0<b≤0.1, 0<x≤1, 0≤y<1, and 0<x+y≤1,
[Chemical Formula 1-1] rLi₂MnO_{3-b"}X'_{b"}·(1-r)Li_{a'}M1_{x'}M2_{y'}O_{2-b'}X_{b'}
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1,
X and X' are halogen optionally replacing at least some of the oxygen present in the lithium manganese-based oxide,
0<r≤0.7, 0<a'≤1, 0≤b'≤0.1, 0≤b"≤0.1, 0<x'≤1, 0≤y'<1, 0<x'+y'≤1, and b' and b" are not 0 at the same time.

6. The positive electrode active material of any one of claims 1 to 5, wherein the average particle diameter of the first lithium manganese-based oxide is in the range of from 2 µm to 6 µm, and/or, wherein the first lithium manganese-based oxide has a BET specific surface area in the range of from 1.0 m²/g to 1.8 m²/g.

7. The positive electrode active material of any one of claims 1 to 6, wherein the second lithium manganese-based oxide is represented by Chemical Formula 2 below:
[Chemical Formula 2] rLi₂MnO₃·(1-r)Li_{a'}M1_{x'}M2_{y'}O₂
wherein,
M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and M2 does not overlap M1,
0<r≤0.7, 0<a'≤1, 0<x'≤1, 0≤y'<1, and 0<x'+y'≤1.

8. The positive electrode active material of any one of claims 1 to 7,
wherein the average particle diameter of the second lithium manganese-based oxide is in the range of from 7 µm to 14 µm, and/or
wherein the second lithium manganese-based oxide has a BET specific surface area in the range of from 1.5 m²/g to 2.3 m²/g.

9. The positive electrode active material of any one of claims 1 to 8, wherein the barrier layer includes an oxide containing at least one element selected from B, Si, P, and Ge.

10. The positive electrode active material of claim 9, wherein the barrier layers include an oxide represented by Chemical Formula 3 below:
[Chemical Formula 3] zLi₂O*(1-z)M3_{d}Oₑ
wherein,
M3 is an at least one element selected from B, Si, P, and Ge,
0<z≤0.8, 0<d≤10, and 0<e≤10.

11. The positive electrode active material of claim 1, wherein the barrier layer includes at least one boron-containing compound selected from B₂O₃, H_{α}B_{β}O_{γ} (0<α<10, 0<β<10, 0<γ<20) and Li_{α'}B_{β'}O_{γ'} (0<α'<10, 0<β'<10, 0<γ'<20).

12. The positive electrode active material of any one of claims 1 to 10, wherein the barrier layers are present in the form of a coating film having a thickness in the range of from 1 nm to 300 nm on the surface of each of the first lithium manganese-based oxide and the second lithium manganese-based oxide.

13. The positive electrode active material of claim 1, wherein the first lithium manganese-based oxide and the second lithium manganese-based oxide are included in a weight ratio of 10:90 to 80:20 in the positive electrode active material.

14. A positive electrode comprising the positive electrode active material according to any one of claims 1 to 13.

15. A lithium secondary battery comprising the positive electrode of claim 14.
